# EUROPEAN PATENT APPLICATION

(11) **EP 0 555 937 A1**
(43) Date of publication of application: **18.08.1993**
(21) Application number: 93200402.1
(22) Date of filing: 12.02.1993
(51) Int. Cl.: A01K 5/02, A23N 17/02

(54) **Feed metering device**

(30) Priority: 14.02.1992 NL 9200266
(71) Applicant: N.V. Nederlandsche Apparatenfabriek NEDAP, NL-7141 DE Groenlo (NL)
(72) Inventor: Harmsen, Jan Hendrik, NL-7255 BJ Hengelo (NL)
(74) Representative: Smulders, Theodorus A.H.J., Ir.

(57) **Abstract**

A feed metering installation, for instance for beets, consisting of a storage container (1) or bunker having arranged therein an auger conveyor (2) comprising star-shaped cutters (3), wherein the cut-up fodder, before being presented to the animal to be fed, is collected and compressed in a metering chamber (4) arranged in front of the auger opening (15), so that feed packets of substantially constant mass are formed, with one or more of these packets being fed per animal, so that the mass fed per animal is practically known and can be controlled.

## Description

The invention relates to a device for metering feed, such as, for instance, beets, potatoes or other tubers, and a manger provided with such a device.

Existing installations for metering feed in the form of beets, for instance, comprise an auger driven by an electric motor, this auger conveying the beets or the like to an opening located, for instance, above a manger. Arranged in this opening is a cutter or a number of cutters, which cut the beets or the like into pieces. The drawback of such known installations is that metering cannot take place accurately, because large and small pieces alternate and, also, hollow spaces of varying magnitude are formed between the fragments of the beets or the like.

The object of the invention is to overcome the drawback outlined and more generally to provide an improved and more accurately operating metering device for feed of the kind set forth above. To this end, according to the invention, a metering device of the type described is characterized in that a metering chamber is arranged which is connected to the discharge opening, this metering chamber comprising detection means which can detect a predetermined degree of filling of the metering chamber and, upon detection of the predetermined degree of filling, can activate means for discharging the feed mass contained in the metering chamber.

According to a further elaboration of the inventive concept, a cutter can be arranged which cuts along the packet throughout the height thereof on one side of the metering chamber, so that the supply opening of the auger is at least briefly closed and the half-supplied fragments are cut off. Accordingly, a quick discharge of a portion of feed contained in the metering chamber is promoted. By feeding several of these packets per animal, it is possible to control the amount per animal in steps having the size of the metering packets. If so desired, a more accurate dosage per animal could be achieved by arranging a second auger, which accurately meters the same amount per rotation from the metering chamber which, accordingly, functions as a buffer chamber.
Figure 1 schematically shows in vertical section an example of a feed container;
Figure 2 shows a detail of a device according to the invention;
Figure 3 schematically shows in vertical section an example of a device according to the invention;
Figure 4 schematically shows a modification of a device according to the invention;
Figure 5 schematically shows in perspective an example of a device according to the invention; and
Figure 6 shows in perspective a modification of the device of Figure 5.

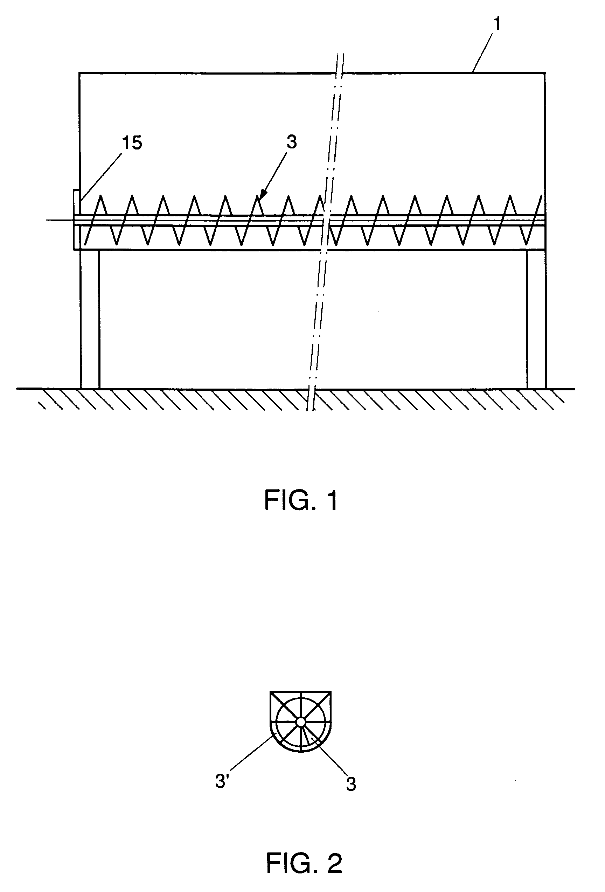

Fig. 1 schematically shows in vertical section a feed container, such as, for instance, a beet container 1.

The beet container comprises an auger 2, which, in operation, is driven in one of the manners conventional therefor and subsequently conveys beets, potatoes, or the like, present in the container, to a discharge opening 15. Arranged in and/or near the discharge opening 15 are cutting means, which cut the beets or the like into smaller pieces. The cutting means can advantageously comprise a stationary cutter, which preferably also constitutes a bearing for the auger, and a cutter rotating with the auger. Thus, the beets or the like, forced through the stationary cutter by the auger, are cut into pieces both by the stationary cutter (in the direction of movement) and by the rotating cutter (transversely to the direction of movement). The cutters can be star-shaped cutters 3, 3', as schematically shown in elevation in Fig. 2.

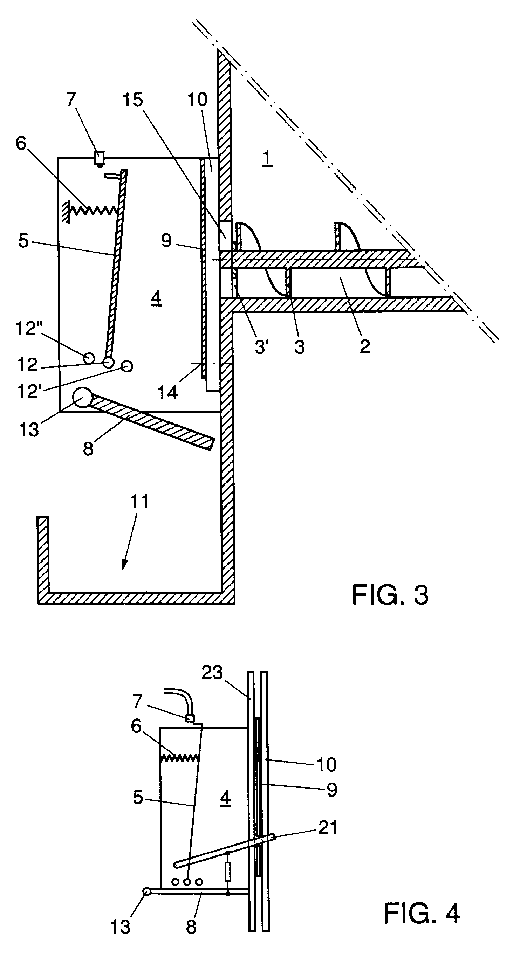

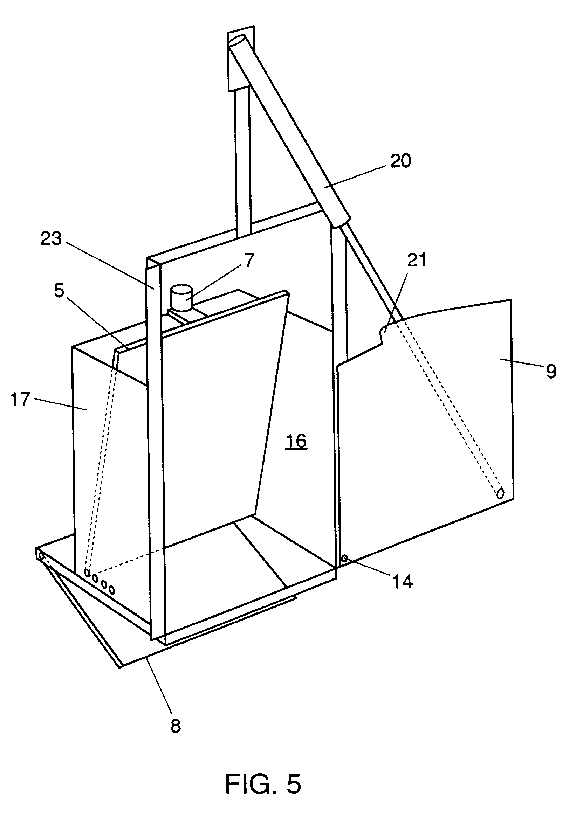

Fig. 3 shows the complete beet metering device in a side section. Arranged at the end of the auger 2, disposed in beet container 1, is a star-shaped cutter 3, cutting the beets supplied via the auger into smaller pieces against a likewise star-shaped countercutter 3'. The cut mass enters a metering chamber 4, of rectangular shape in the present example. Arranged in this metering chamber 4 is an adjustable metering plate 5, mounted on a pivot 12. The pivots 12 of this metering plate 5 are arranged in the side walls 16, 17 (Fig. 5) of the metering chamber 4.

In the example shown, several holes 12', 12'' are provided in these side plates and the volume of the metering chamber 4 can be changed by adjusting metering plate 5. The metering plate 5 is urged into its rightmost position by carrying means, comprising an adjustable compression spring 6 in the present example. When auger 2 in beet container 1 starts rotating, for instance controlled by a signal delivered by a transmitter-receiver which has identified a responder-carrying animal that is entitled to a feeding, metering chamber 4 is filled with cut beets. These cut beets press metering plate 5 backwards, while the feed mass is somewhat compressed as well. Because the bottom valve 8 of the metering chamber is in the closed position while metering chamber 4 is being filled, metering plate 5 will continue to be pressed backwards until this plate operates an end switch 7 or activates a sensor whereby the auger motor is stopped. The degree of filling of the metering chamber will be determined by the spring tension of compression spring 6. Thus, metering chamber 4 will contain a fairly constant amount of cut beets in each metering operation, because the free space between the pieces of the beets and the like, which was originally considerable and sometimes varied substantially, is reduced.

After the auger motor has stopped, the packet of cut beets, contained in the metering chamber, must be discharged via the bottom valve 8 into the manger located therebelow at 11.

To this end, the bottom valve 8, drawn in a slightly opened position in Fig. 3, is opened. The valve pivots clockwise about the hinge point indicated at 13. The feed contained in the metering chamber subsequently falls from the metering chamber into manger 11. This is promoted by the slanted position of the metering plate and the force exerted on the feed mass by the metering plate.

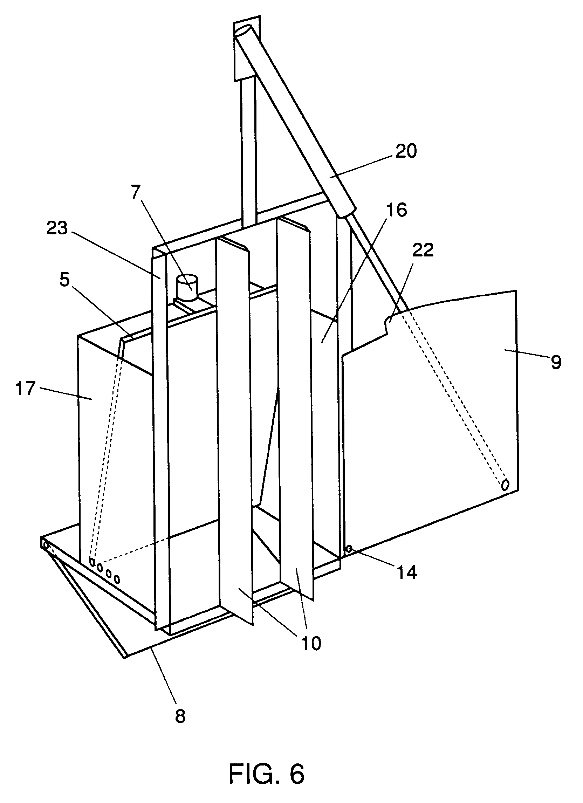

To prevent the feed from sticking and/or any more feed from falling from the container into the metering chamber during the discharge of feed from the metering chamber, preferably a cutter 9 is used, capable of cutting the feed in the metering chamber loose from the feed which is still contained in the container near discharge opening 15. Preferably, the cutter is formed such that the discharge opening is also closed by the cutter for some time. An example of a suitable form of the cutter 9 is schematically shown in Figs 5 and 6. The operating means for such a cutter are also schematically shown at 20. These operating means can be energized by means of, for instance, a switch 7 or an apparatus activated by a sensor 7.

Also, the driving motor of auger 1 is preferably switched off simultaneously with the energization of cutter 9. The cutter 9 shown is plate-shaped and is pivotally mounted at 14 in front of the opening of the auger. In the present example, the cutter is shaped so as to pivot and cuts more or less from top to bottom along opening 15. In the present example a number of countercutters 10 are arranged vertically, promoting the cutting action. By providing a sharp edge on the side of the star cutters, larger pieces from the auger can be cut once more.

During the last part of the cutting action of cutter 9, the bottom valve 8 is opened, so that the packet of cut beets or the like falls down from the metering chamber into the manger. Subsequently, cutter 9 moves back again to the starting position, while the opening of the auger is cleared again. Also, bottom valve 8 closes again. When the starting position has been reached again, the auger motor can start running again to meter the next portion. In this manner, several portions of the size of some kilograms can be metered for each animal. The operation of bottom valve 8 can be coupled mechanically to the movement of cutter 9.

To this end, an operation lever 21 is shown in Fig. 4, coupled to bottom valve 8 and to be operated by a nose 22 (Figs 5 and 6). In the embodiment of Figs 4-6, cutter 9 is guided by mounting frame members, for instance angle irons 23 of the metering chamber and countercutters 10.

Of course, instead of pivoting about pivot 14, cutter 9, in a slightly different construction, can also be mounted for sliding movement.

For security, the auger motor can also remain blocked as long as cutter 9, bottom valve 8 and metering plate 5 have not returned to their respective rest positions.

In another embodiment of the metering chamber, the function of metering plate 5 and that of bottom valve 8 could be combined to form an adjustable spring-mounted bottom valve, which, at a given filling and compression, exhibits a slight downward movement which may then activate a switch or a sensor, whereupon the further operation proceeds as described above.

After the foregoing, various modifications will readily occur to a person of ordinary skill in the art. For instance, it is possible to provide the metering chamber with a second auger for supplying the feed contained in the metering chamber in a dosed manner to a manger or to a second metering chamber of the type described above. Thus, the accuracy of the feed dosage could be further increased.

These and similar modifications are considered to fall within the framework of the invention as determined by the claims.

## Claims

1. A feed metering device, suitable in particular for beets, potatoes or other tubers, comprising a storage container (1) provided with an auger conveyor (2) and a discharge opening (15),
characterized in that a metering chamber (4) is arranged that connects to the discharge opening, said metering chamber comprising detection means which can detect a predetermined degree of filling of the metering chamber (4) and, upon detection of the predetermined degree of filling, can activate means for discharging the feed mass contained in the metering chamber.

2. A device according to claim 1, characterized in that the detection means comprise a hinged wall (5), co-acting with a detection means (7), which can detect the position of the hinged wall.

3. A device according to claim 2, characterized in that the hinged wall (5) is a wall under spring tension, urged inwards by the spring tension.

4. A device according to any one of the preceding claims, characterized in that the means for discharging the feed mass contained in the metering chamber (4) comprise a bottom valve (8).

5. A device according to any one of claims 1-3, characterized in that the means for discharging the feed mass contained in the metering chamber (4) comprise an auger.

6. A device according to claim 5, characterized by a second metering chamber, receiving feed from the first metering chamber.

7. A device according to any one of the preceding claims, characterized by a cutter (9), cutting the connection between the feed mass in the metering chamber and the feed mass in the container (1) as soon as the predetermined degree of filling has been reached.

8. A device according to claim 7, characterized in that the cutter (9) co-acts with at least one countercutter (10) disposed in or in front of the discharge opening (15).

9. A device according to claim 7 or 8, characterized in that the cutter (9) is plate-shaped and closes the discharge opening (15) of the container (1) during the discharge of feed from the metering chamber.

10. A device according to any one of claims 7-9, characterized in that the cutter (9) comprises at least one member (22) operating directly or indirectly the means for discharging the feed mass from the metering chamber.

11. A device according to any one of the preceding claims, characterized in that near the discharge opening (15) of the container (1), cutting means (3, 3') are provided, cutting into pieces beets or the like supplied by the auger.

12. A device according to claim 11, characterized in that the cutting means comprise a stationary cutter, also constituting a bearing for the auger, and a rotating cutter.

13. A device according to any one of claims 3-12, characterized in that the spring tension is set such that the feed mass in the metering chamber (4) is compressed to a certain extent.

14. A device according to any one of the preceding claims, characterized in that switching-off means are provided, which switch off the drive of the auger (2) in the container (1) upon activation of the means for discharging a feed mass contained in the metering chamber.

15. A device according to claim 14, characterized in that the switching-off means maintain the drive of the auger (2) in the switched-off position as long as the bottom valve (8) and/or the hinged wall have not returned to the fixed position.

16. A manger provided with a device according to one or more of the preceding claims.
